# EUROPÄISCHE PATENTSCHRIFT

(11) **EP 3 312 633 B1**
(45) Veröffentlichungstag und Bekanntmachung des Hinweises auf die Patenterteilung: **09.12.2020**
(21) Anmeldenummer: 17197750.7
(22) Anmeldetag: 23.10.2017
(51) Int. Cl.: G01S 19/07

(54) **VERFAHREN UND SYSTEM ZUM ERMITTELN EINER POSITION EINER MOBILEN VORRICHTUNG**
METHOD AND SYSTEM FOR DETERMINING A POSITION OF A MOBILE DEVICE
PROCÉDÉ ET APPAREIL DE DÉTERMINATION D'UNE POSITION D'UN DISPOSITIF MOBILE

(30) Priorität: 24.10.2016 DE 102016120235
(43) Veröffentlichungstag der Anmeldung: 25.04.2018
(73) Patentinhaber: Geo++ GmbH, 30827 Garbsen (DE)
(72) Erfinder: Wübbena, Gerhard, 30823 Garbsen (DE)
(74) Vertreter: Gramm, Lins & Partner Patent- und Rechtsanwälte PartGmbB

(56) Entgegenhaltungen:
- EP-A2- 2 784 543
- WO-A1-2012/161923
- WO-A2-2011/106278
- US-A- 6 100 842

## Beschreibung

Die Erfindung betrifft ein Verfahren und ein System zum Ermitteln einer Position einer mobilen Vorrichtung, wobei durch eine Positionsermittlungseinrichtung mittels eines GNSS basierend auf einer Laufzeitmessung von GNSS-Signalen verschiedener GNSS-Satelliten, die von einem GNSS-Empfänger der ersten mobilen Vorrichtung empfangen werden, die Position der mobilen Vorrichtung ermittelt wird.

Mit der Entwicklung der Satellitennavigationssysteme (GNSS: Global Navigation Satellite System), wie beispielsweise GPS, Galileo oder Glonass, wurde die Möglichkeit geschaffen, die Position von mobilen Vorrichtungen, wie beispielsweise Fahrzeuge, Schiffe, Flugzeuge oder elektronische Handgeräte, überall auf der Welt sehr genau zu ermitteln. Erst hierdurch werden Anwendungsfälle wie eine automatische Routennavigation oder das autonome Fahren möglich, da eine zuverlässige und genaue Positionsermittlung der Fahrzeuge eine wesentliche Grundvoraussetzung für derartige Technologien sind.

Bei einem Satellitennavigationssystem befindet sich eine Mehrzahl von Satelliten in einer vorgegebenen Umlaufbahn um die Erde und senden dabei kontinuierlich entsprechende Positionssignale (GNSS-Signale) aus, die von einem Signalempfänger (GNSS-Empfänger) empfangen werden können. Aus der Berechnung der Signallaufzeit der einzelnen empfangenen GNSS-Signale lässt sich dann die Entfernung vom GNSS-Empfänger zum jeweiligen GNSS-Satelliten berechnen, so dass bei einer hinreichenden Anzahl von Satelliten (hinreichende Genauigkeit mit vier Satelliten) und deren jeweilige berechnete Entfernung zum GNSS-Empfänger sowie unter Kenntnis der aktuellen Position des jeweiligen GNSS-Satelliten auf seiner Umlaufbahn dann die Position des GNSS-Empfängers durch Berechnen des Schnittpunktes der durch die Entfernungsmessung aufgespannten Kugeln um den jeweiligen Satelliten herum ermittelt werden kann.

Die Genauigkeit bei der Positionsermittlung hängt dabei insbesondere von zwei wesentlichen Faktoren ab. Zum einen existieren satellitenbedingte Fehler, die ihren Ursprung im Satellitenkontext selber haben. Dies sind beispielsweise Uhrenfehler der Satelliten oder beispielsweise ein Bahnfehler des Satelliten auf seiner Umlaufbahn. Aufgrund der Tatsache, dass für eine Laufzeitmessung der GNSS-Signale eine hochgenaue Synchronisation aller Satelliten und des GNSS-Empfängers notwendig ist, kann eine Abweichung einer Satellitenuhr die Genauigkeit negativ beeinflussen. Zum anderen existieren insbesondere signalbedingte Fehler, die ihren Ursprung in der Durchquerung der Signale durch die Sphären, wie beispielsweise die Ionosphäre, haben. So ist es beispielsweise bekannt, dass beim Durchqueren eines GNSS-Signals durch die Tropo- und Ionosphäre das GNSS-Signal hinsichtlich seiner Laufzeitgeschwindigkeit beeinflusst wird, wodurch sich bei der Laufzeitberechnung basierend auf einem festen Wert der Signalgeschwindigkeit einen Genauigkeitsfehler ergibt.

Um dieses Problem der Ungenauigkeit von Satellitennavigationssystemen zu lösen, ist ein sogenanntes Differential-Global-Positioning-System (DGPS) bekannt. Die sich in der Praxis eines GNSS ergebenden Ungenauigkeiten - basierend auf einer zeitlichen und räumlichen Variation der Signalgeschwindigkeiten in der Tropo- und Ionosphäre sowie basierend auf den Bahnen- und Uhrenfehler der Satelliten - können damit korrigiert werden, indem diese Fehler mithilfe einer ortsfesten Referenzstation ermittelt werden. Bei einer solchen ortsfesten Referenzstation handelt es sich im Allgemeinen um einen GNSS-Empfänger, dessen Position auf der Erde durch andere Messverfahren hochgenau bekannt ist. Basierend auf einem Vergleich zwischen der eigenen bekannten Position und der mithilfe des GNSS ermittelten Position lässt sich dann eine entsprechende Fehlerkorrektur für das Signal ermitteln. Die in der Umgebung einer derartigen ortsfesten Referenzstation befindlichen mobilen Vorrichtungen können dann ein entsprechendes Signal von der Referenzstation erhalten, das den jeweiligen Korrekturwert bzw. die Korrekturwerte enthält, um so die Genauigkeit des in der nativen Ausführung fehlerbehafteten GNSS zu erhöhen.

Da mit zunehmendem Abstand der mobilen Vorrichtung bzw. der GNSS-Empfänger zu der ortsfesten Referenzstation die Korrektur weniger genau wird, lassen sich größere Abstände dadurch überbrücken, dass zwischen mehreren Referenzstationen interpoliert wird.

Zwar lassen sich mit dem DGPS und den ortsfesten Referenzstationen die sogenannten globalen Fehleranteile eines GNSS, also jene Fehler, die keine räumliche und zeitliche Varianz aufweisen, bei der Positionsermittlung zuverlässig korrigieren. Die lokalen Fehleranteile, also jene GNSS-Fehler, die eine räumliche und zeitliche Varianz aufweisen, lassen sich dabei nur mithilfe der ortsfesten Referenzstationen bedingt korrigieren, wobei die Genauigkeit der Fehlerkorrektur mit zunehmendem Abstand zu der Referenzstation abnimmt. Da die Anzahl der ortsfesten Referenzstationen stark begrenzt ist, ist der Abstand zwischen den einzelnen Referenzstationen relativ groß, so dass eine Interpolation zwischen den Referenzstationen die räumlich und zeitlich variierenden Fehler nur sehr bedingt abbilden kann.

Aus der US 6,100,842 ist ein Verfahren zum Orten von mobilen Stationen bekannt, wobei eine mobile Referenzstation verwendet werden soll, die zusammen mit einer festen Basisstation eine Fehlerinformation basierend auf der doppelten Referenzberechnung zwischen gemeinsam beobachteten Satelliten ermitteln soll.

Aus der EP 2 784 543 A2 ist ein Traktor bekannt, der in Art einer ortsfesten Referenzstation ein Korrektursignal für ein Handgerät aussendet, das sich in der Nähe befindet.

Aus der WO 2012/161923 A1 ist schließlich ein Handgerät bekannt, das explizit eine NONE-GNSS Positionierung durch Unterstützung eines weiteren Handgerätes vornimmt.

Es ist daher Aufgabe der vorliegenden Erfindung ein verbessertes Verfahren und ein verbessertes System anzugeben, mit dem die Genauigkeit bei der Ermittlung einer Position einer mobilen Vorrichtung insbesondere in Bezug auf die räumlich und zeitlich variierenden Fehler deutlich verbessert werden kann.

Die Aufgabe wird mit dem Verfahren gemäß Anspruch 1 sowie dem System gemäß Anspruch 5 erfindungsgemäß gelöst.

Gemäß Anspruch 1 wird ein Verfahren zum Ermitteln einer Position einer ersten mobilen Vorrichtung vorgeschlagen, wobei durch eine Positionsermittlungseinrichtung mittels eines GNSS basierend auf einer Laufzeitmessung von GNSS-Signalen verschiedener GNSS-Satelliten, die von einem GNSS-Empfänger der ersten mobilen Vorrichtung empfangen werden, die Position der ersten mobilen Vorrichtung ermittelt wird. Bei der ersten mobilen Vorrichtung handelt es sich demzufolge um jene mobile Vorrichtung, dessen Position ermittelt werden soll. Zum Empfangen der GNSS-Signale der GNSS-Satelliten ist der GNSS-Empfänger an oder in der mobilen Vorrichtung angeordnet und dort vorgesehen und verfügt ggf. über eine entsprechende Antenne. Die Positionsermittlungseinrichtung, die mit dem GNSS-Empfänger signaltechnisch in Verbindung steht, ist dabei vorzugsweise ebenfalls an oder in der mobilen Vorrichtung angeordnet und dort vorgesehen. Im Zuge eines zentralisierten Systems ist es aber auch denkbar, dass die Positionsermittlungseinrichtung nicht Bestandteil der mobilen Vorrichtung ist, so dass die von dem GNSS-Empfänger empfangenen GNSS-Signale an die Positionsermittlungseinrichtung zunächst signaltechnisch übertragen werden müssen. In der Regel wird die Positionsermittlungseinrichtung aber Bestandteil der mobilen Vorrichtung sein.

Eine mobile Vorrichtung kann dabei insbesondere ein Straßenfahrzeug, wie Autos oder LKWs, sein. Denkbar ist auch, dass die mobile Vorrichtung ein Schiff bzw. Wasserfahrzeug oder ein Luftfahrzeug ist. Darüber hinaus ist es auch denkbar, dass die mobile Vorrichtung ein elektronisches Endgerät ist, wie beispielsweise ein Laptop, Tablet oder ein Mobilfunkendgerät, beispielsweise ein Smartphone, ist.

Die Positionsermittlungseinrichtung ist dabei so ausgebildet, dass sie in Abhängigkeit der durch den GNSS-Empfänger empfangenen GNSS-Signale die Position der mobilen Vorrichtung berechnet und ermittelt. Das Berechnen der Positionen in Abhängigkeit von den empfangenen GNSS-Signalen erfolgt dabei gemäß der Funktionsweise eines Satellitennavigationssystems basierend auf Laufzeitdifferenzen der empfangenen GNSS-Signale. Die ermittelte Position bezieht sich dabei entweder nativ auf den konkreten Empfangsort, d.h. die Antenne bzw. der GNSS-Empfänger oder wurde aufgrund der festen Einbauposition der Antenne bzw. des GNSS-Empfängers in Bezug auf die mobile Vorrichtung auf einen Referenzpunkt der mobilen Vorrichtung normiert. Insoweit meint die Position der mobilen Vorrichtung bei größeren Vorrichtungen, wie beispielsweise Fahrzeugen, einen bestimmten Referenzpunkt in Bezug auf die mobile Vorrichtung.

Erfindungsgemäß ist nun vorgesehen, dass eine Fehlerinformation des GNSS aus den GNSS-Signalen verschiedener GNSS-Satelliten, die von einem an mindestens einer zweiten mobilen Vorrichtung vorgesehenen GNSS-Empfänger an einer Empfangsposition der zweiten mobilen Vorrichtung empfangen werden, durch eine Fehlerbestimmungseinrichtung ermittelt wird.

Die Ermittlung mindestens einer Fehlerinformation des GNSS, die einen Genauigkeitsfehler des GNSS beinhaltet, erfolgt dabei insbesondere für die räumlich und zeitlich variierenden Genauigkeitsfehler, wie sie beispielsweise durch die Tropo- und Ionosphäre bedingt werden.

Die zweite mobile Vorrichtung weist dabei ebenfalls einen GNSS-Empfänger auf, um die GNSS-Signale der GNSS-Satelliten empfangen und an die Fehlerbestimmungseinrichtung weiterleiten zu können. Die Fehlerbestimmungseinrichtung kann dabei ebenfalls an oder in der mobilen Vorrichtung vorgesehen und Bestandteil dieser sein, so dass für jede mobile Vorrichtung eine Fehlerbestimmungseinrichtung vorgesehen ist und die Fehlerbestimmung somit dezentral von jeder mobilen Vorrichtung selber durchgeführt wird. Denkbar ist aber auch, dass für alle mobilen Vorrichtungen eine zentrale Fehlerbestimmungseinrichtung vorgesehen ist, wobei die mobilen Vorrichtungen dann so ausgebildet sind, dass die durch gen GNSS-Empfänger empfangenen GNSS-Signale oder die daraus abgeleiteten Eigenschaften der Signale an die zentrale Fehlerbestimmungseinrichtung übertragen und dort ausgewertet werden. Die Ermittlung einer Fehlerinformation durch die Fehlerbestimmungseinrichtung basiert somit auf den empfangenen GNSS-Signalen der verschiedenen GNSS-Satelliten, die von einer mobilen Vorrichtung empfangen werden. Dadurch wird es möglich, an der Empfangsposition der zweiten mobilen Vorrichtung, d.h. jener aktuellen Position, die zu dem Zeitpunkt vorlag, an dem die GNSS-Signale durch den GNSS-Empfänger der mobilen Vorrichtung empfangen wurden, die entsprechende

Fehlerinformation zu ermitteln, so dass der entsprechenden Empfangsposition die an dieser Empfangsposition ermittelten Fehlerinformationen zugeordnet werden können.

Dabei ist es denkbar, dass die Fehlerbestimmungseinrichtung Bestandteil einer Positionsermittlungseinrichtung der zweiten mobilen Vorrichtung ist, da auch die zweite mobile Vorrichtung zum Ermitteln der Position mithilfe eines GNSS ausgebildet sein kann. Dabei ist es auch denkbar, dass die erste mobile Vorrichtung neben der Positionsermittlungseinrichtung auch eine Fehlerbestimmungseinrichtung aufweist. Die Rolle der ersten und der zweiten mobilen Vorrichtung ist dann wahlweise austauschbar.

Die an der Empfangsposition der zweiten mobilen Vorrichtung ermittelte Fehlerinformation des GNSS wird nun an die Positionsermittlungseinrichtung der ersten mobilen Vorrichtung übertragen, so dass der Positionsermittlungseinrichtung der ersten mobilen Vorrichtung für die Ermittlung der Positionen der ersten mobilen Vorrichtung eine Fehlerinformation des GNSS vorliegt. Die Positionsermittlungseinrichtung der ersten mobilen Vorrichtung ist nun so ausgebildet, dass sie die Position der ersten mobilen Vorrichtung unter Berücksichtigung der an der Empfangsposition der mindestens zweiten mobilen Vorrichtung ermittelten und an die Positionsermittlungseinrichtung übertragenden Fehlerinformation des GNSS ermittelt, so dass der Positionsermittlungseinrichtung der ersten mobilen Vorrichtung insbesondere eine räumlich und zeitlich variierende Fehlerinformation vorliegt, wodurch die Fehlerkorrektur bei derartigen lokal begrenzten Fehlern deutlich verbessert werden kann.

Es existiert eine Vielzahl von zweiten mobilen Vorrichtungen, die alle an ihren jeweiligen Empfangspositionen mindestens eine Fehlerinformation des GNSS ermitteln, so dass sich hierdurch ein sehr gutes Bild der räumlich und zeitlich variierenden Fehler ermitteln lässt, wodurch die Wahrscheinlichkeit, dass eine erste mobile Vorrichtung, die ihre Position ermitteln will, in der Nähe einer Empfangsposition einer zweiten mobilen Vorrichtung, an der eine Fehlerinformation des GNSS ermittelt wurde, befindet, so dass der räumlich und zeitlich variierende Fehler bzw. Laufzeitfehler der GNSS-Signale deutlich besser und genauer korrigiert werden kann. Die zweiten mobilen Vorrichtungen werden demnach in Art einer ortsfesten Referenzstation verwendet, wobei mithilfe der Fehlerbestimmungseinrichtung für die einzelnen mobilen Vorrichtungen an der jeweiligen Empfangsposition eine Fehlerinformation des GNSS aus den empfangenen GNSS-Signalen ermittelt werden kann.

Vorteilhafterweise wird die Ermittlung der mindestens einen Fehlerinformation mittels der zweiten mobilen Vorrichtung im bewegten oder unbewegten Zustand der zweiten mobilen Vorrichtung durchgeführt.

Erfindungsgemäß ist eine Mehrzahl von zweiten mobilen Vorrichtungen vorgesehen, an deren jeweiligen Empfangspositionen mindestens eine Fehlerinformation des GNSS ermittelt wird, wobei die an der jeweiligen Empfangsposition der zweiten mobilen Vorrichtung ermittelten Fehlerinformationen des GNSS an die Positionsermittlungseinrichtung der ersten mobilen Vorrichtung übertragen und die Position der ersten mobilen Vorrichtung durch die Positionsermittlungseinrichtung unter Berücksichtigung dieser an den verschiedenen Empfangspositionen der zweiten mobilen Vorrichtung ermittelten Fehlerinformationen des GNSS ermittelt wird. Dabei ist es denkbar, dass die Positionsermittlungseinrichtung der ersten mobilen Vorrichtung unter Berücksichtigung aller hier übertragenen ermittelten Fehlerinformationen des GNSS die eigene Position der ersten mobilen Vorrichtung ermittelt.

Denkbar ist aber auch, dass nur jene Fehlerinformationen bei der Ermittlung der Position der ersten mobilen Vorrichtung berücksichtigt werden, deren jeweilige Empfangsposition innerhalb eines vorgegebenen Radius bzw. innerhalb einer vorgegebenen Umgebung liegen, so dass nur Fehlerinformationen bei der Ermittlung der eigenen Position verwendet werden, die einen engen räumlichen Bezug zu eigenen Position haben.

Es ist allerdings auch denkbar, dass bei der Berücksichtigung der Fehlerinformationen diese in Abhängigkeit einer Entfernung der ersten mobilen Vorrichtung zu der jeweiligen Empfangsposition der jeweiligen Fehlerinformation gewichtet werden, so dass insbesondere Fehlerinformationen mit einer Empfangsposition sehr nahe an der ersten mobilen Vorrichtung höher gewichtet und somit größeren Einfluss auf die Ermittlung der Position haben, als Fehlerinformationen mit einer Empfangsposition, die deutlich weiter entfernt ist von der Position der ersten mobilen Vorrichtung.

In einer weiteren vorteilhaften Ausführungsform ist es auch denkbar, dass nur diejenigen Fehlerinformationen an die Positionsermittlungseinrichtung der ersten mobilen Vorrichtung übertragen werden deren jeweilige Empfangsposition innerhalb einer vorgegebenen Umgebung bzw. innerhalb eines vorgegebenen Radius in Bezug auf die erste mobile Vorrichtung liegen. Somit werden nicht die Fehlerinformationen aller zweiten mobilen Vorrichtungen übertragen, sondern nur jene Fehlerinformationen, die in Bezug auf ihre jeweilige Empfangsposition eine Relevanz für die Ermittlung der Position der ersten mobilen Vorrichtung haben. Hierdurch kann die Menge der zu übertragenden Daten besser skaliert werden.

Erfindungsgemäß werden Fehlerinformationen des GNSS, die mittels mindestens einer ortsfesten Referenzstation ermittelt wurden, an die Positionsermittlungseinrichtung der ersten mobilen Vorrichtung übertragen, wobei die Position der ersten mobilen Vorrichtung durch die Positionsermittlungseinrichtung dann unter Berücksichtigung der Fehlerinformationen des GNSS, die mithilfe der zweiten mobilen Vorrichtung ermittelt werden, und unter Berücksichtigung der Fehlerinformationen des GNSS, die mittels der ortsfesten Referenzstation (EN) ermittelt werden, ermittelt wird.

Hierdurch wird es möglich, globale Fehleranteile des GNSS von den ortsfesten Referenzstationen direkt zu erhalten, während die räumlich und zeitlich variierenden Fehler von den Fehlerinformationen der zweiten mobilen Vorrichtungen stammen. Damit ergibt sich für die Korrekturermittlung der Position der ersten mobilen Vorrichtung mittels des GNSS der Fall, dass die Korrekturinformationen auf zwei unterschiedlichen Datenquellen basieren, nämlich zum einen auf ortsfesten Referenzstationen und zum anderen auf mobilen Vorrichtungen andererseits. Ohne die Anzahl der ortsfesten Referenzstationen signifikant zu erhöhen, kann somit mithilfe eines bekannten GNSS die Genauigkeit eines DGPS erreicht werden.

Demzufolge ist es ganz besonders vorteilhaft, wenn eine oder mehrere positionsunabhängige Fehlerinformationen des GNSS, die unabhängig von einer Empfangsposition einen Genauigkeitsfehler des GNSS charakterisieren und die mittels wenigstens einer ortsfesten Referenzstation ermittelt wurden, an die Positionsermittlungseinrichtung der ersten mobilen Vorrichtung übertragen werden und wobei eine positionsabhängige Fehlerinformation des GNSS, die abhängig von einer Empfangsposition (räumlich und/oder zeitlich) einen Genauigkeitsfehler des GNSS charakterisiert und mittels der wenigstens einen zweiten mobilen Vorrichtung ermittelt wurde, an die Positionsermittlungseinrichtung der ersten mobilen Vorrichtung übertragen wird, wobei die Position der ersten mobilen Vorrichtung durch die Positionsermittlungseinrichtung unter Berücksichtigung der positionsunabhängigen Fehlerinformation des GNSS und der positionsabhängigen Fehlerinformation des GNSS ermittelt wird.

Des Weiteren werden eine oder mehrere positionsunabhängige Fehlerinformation des GNSS, die unabhängig von einer Empfangsposition einen Genauigkeitsfehler des GNSS charakterisieren und die mittels wenigstens einer ortsfesten Referenzstation ermittelt wurden, an die Fehlerbestimmungseinrichtung der zweiten mobilen Vorrichtung übertragen, wobei eine positionsabhängige Fehlerinformation des GNSS, die abhängig von einer Empfangsposition einen Genauigkeitsfehler des GNSS charakterisiert, an der Empfangsposition der wenigstens einen zweiten mobilen Vorrichtung aus den GNSS-Signalen verschiedener GNSS-Satelliten, die von dem GNSS-Empfänger der mindestens einen zweiten mobilen Vorrichtung an der Empfangsposition der zweiten mobilen Vorrichtung empfangen werden, unter Berücksichtigung der positionsunabhängigen Fehlerinformationen der wenigstens einen Referenzstation durch die Fehlerbestimmungseinrichtung ermittelt wird.

Unter Kenntnis der positionsunabhängigen Fehlerinformationen, d.h. der globalen Fehleranteile des Gesamtfehlers des GNSS, verbleiben als Fehler die räumlich und zeitlich variierenden Fehler, die insbesondere durch die Beeinflussung der Signallaufzeit in der Tropo- und Ionosphäre bedingt werden. So ist es beispielsweise denkbar, dass über einen längeren Zeitraum mithilfe der Fehlerbestimmungseinrichtung die GNSS-Signale der Satelliten empfangen werden, wobei bei einer hinreichenden Anzahl von GNSS-Signalen und der damit einhergehenden Positionsbestimmung der zweiten mobilen Vorrichtung dann ein Maß für den Laufzeitfehler abgeleitet werden kann, der dann als positionsabhängige Fehlerinformation an der Empfangsposition der zweiten mobilen Vorrichtung definiert werden kann.

Als positionsunabhängige Fehlerinformation des GNSS kommen insbesondere ein Uhrenfehler eines GNSS-Satelliten, ein Bahnfehler eines GNSS-Satelliten, ein Signalbias und/oder globale atmosphärisch bedingte Fehler in Betracht. Die positionsabhängige Fehlerinformation kann dabei ein lokaler, atmosphärisch bedingter Fehler sein, der insbesondere durch die Tropo- und/oder Ionosphäre bedingt wird.

Die Erfindung wird anhand der beigefügten Figuren beispielhaft näher erläutert. Es zeigen:
- Figur 1 -: Schematische Darstellung des Systems in einer dezentralen Ausführungsform;
- Figur 2 -: Schematische Darstellung des erfindungsgemäßen Systems in einer zentralen Ausführungsform;
- Figur 3 -: Diagramm zum Funktionsprinzip des vorliegenden erfindungsgemäßen Verfahrens.

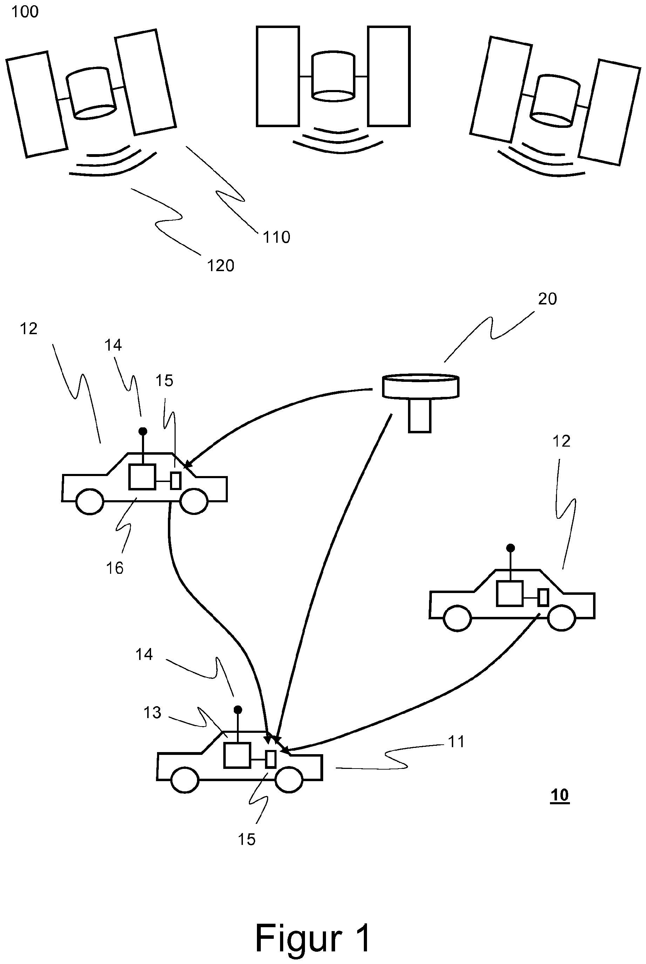

Figur 1 zeigt das erfindungsgemäße System 10 zum Ermitteln einer Position einer ersten mobilen Vorrichtung 11 mithilfe eines Satellitennavigationssystems 100, das aus einer Mehrzahl von Satelliten 110 besteht und die zum Aussenden von GNSS-Signalen 120 ausgebildet sind, auf deren Basis dann die Position der ersten mobilen Vorrichtung 11 ermittelt werden soll. Das Satellitennavigationssystem 100 ist mit seinen Satelliten dabei nicht Bestandteil des Systems 10, sondern ist lediglich die Basis, auf der das System 10 ansetzt.

Im Ausführungsbeispiel der Figur 1 sind die mobilen Vorrichtungen Kraftfahrzeuge, deren Position hochgenau ermittelt werden soll. Die erste mobile Vorrichtung 11 weist hierfür eine Positionsermittlungseinrichtung 13 auf, die mit einem GNSS-Empfänger 14 in Verbindung steht. Der GNSS-Empfänger 14 weist darüber hinaus eine Antenne auf, mit der die GNSS-Signale 120 der Satelliten 110 an der mobilen Vorrichtung 11 empfangen werden können.

Basierend auf den empfangenen GNSS-Signalen 120 durch den GNSS-Empfänger 14 der ersten mobilen Vorrichtung 11 kann die Positionsermittlungseinrichtung 13 der ersten mobilen Vorrichtung 11 die Position der ersten mobilen Vorrichtung 11 in Bezug auf einen Referenzpunkt der ersten mobilen Vorrichtung 11 ermitteln. Hierzu wird die Laufzeit der einzelnen Signale 120 der Satelliten 110 ermittelt und damit die Position bestimmt. Dies kann beispielsweise mithilfe der Hyperbelnavigation erfolgen.

Des Weiteren weist das System 10 in der ersten mobilen Vorrichtung 11 ein Kommunikationsmodul 15 auf, das ausgebildet ist, mit anderen Kommunikationsmodulen anderer Vorrichtungen oder Stationen, wie nachfolgend erläutert, zu kommunizieren.

Des Weiteren sind im Ausführungsbeispiel der Figur 1 zwei weitere zweite mobile Vorrichtungen 12 vorgesehen, die hinsichtlich der zugrundeliegenden Funktionalität identisch sind. Jede der mobilen Vorrichtungen 12, die ebenfalls ein Fahrzeug sind, weisen eine Fehlerbestimmungseinrichtung 16 auf, die mit einem an den zweiten mobilen Vorrichtungen 12 angeordneten GNSS-Empfänger 14 signaltechnisch in Verbindung stehen. Auch die zweiten Vorrichtungen 12 weisen ein Kommunikationsmodul 15 auf, das mit der Fehlerbestimmungseinrichtung 16 signaltechnisch in Verbindung steht und zum Austausch von Daten mit anderen Vorrichtungen dient.

Die Fehlerbestimmungseinrichtung 16 der zweiten mobilen Vorrichtung 12 ist dabei so ausgebildet, dass sie in Abhängigkeit der durch den jeweiligen GNSS-Empfänger 14 empfangenen GNSS-Signale 120 eine Fehlerinformation des GNSS 100 an der Empfangsposition der jeweiligen zweiten mobilen Vorrichtung 12 ermittelt. Diese Fehlerinformationen des GNSS 100 können dabei neben den globalen Fehleranteilen (Bahnfehler, Uhrenfehler) auch atmosphärisch bedingte Fehlerinformationen enthalten, die räumlich und zeitlich variieren. Für die jeweilige Empfangsposition der zweiten mobilen Vorrichtung 12 lässt sich somit eine auf die Empfangsposition lokal bezogene Fehlerinformation des GNSS 100 ermitteln, die dann auch die räumlich und zeitlich variierenden Fehleranteile beinhaltet. Daher ist es ganz besonders vorteilhaft, wenn jede Fehlerinformation, die von einer zweiten mobilen Vorrichtung 12 ermittelt wird, in Bezug zu der Empfangsposition und Empfangszeit gesetzt wird.

Das Ermitteln einer Fehlerinformation basierend aus dem Empfangen von GNSS-Signalen kann dabei durch den Empfang von mehr als dem hier notwendigen Satelliten erfolgen. Messungen mittels GNSS sind meist überbestimmt, d.h. es werden wesentlich mehr als die vier notwendigen Satelliten empfangen. Hierdurch können über die reine Position und Empfängeruhr hinaus auch weitere Zustandsgrößen ermittelt werden, die beispielsweise die räumlich und zeitlich variierenden, atmosphärisch bedingen Fehleranteile. Eingangsgrößen in die Berechnung können dabei Pseudoranges und Phasenmessungen zu den einzelnen (mehr als vier) Satelliten und deren empfangenen Signalen sein. Ausgangsgrößen wären die dreidimensionalen Koordinaten (X, Y, Z), der Empfängeruhrenfehler (Δ_{T}) sowie ein Satz an Atmosphärenkorrekturparametern. Der Empfängeruhrenfehler sowie ein Satz an Atmosphärenkorrekturparametern stellen dabei jeweils eine Fehlerinformation des GNSS im Sinne der vorliegenden Erfindung dar. Dabei wird aus einer Vielzahl an fehlerbehafteten Messungen zu den einzelnen Satelliten sowohl die Position als auch die Atmosphäre zu einem Schritt/zu einem Zeitpunkt berechnet.

Um die Genauigkeit bei der Ermittlung des GNSS-Fehlers zu erhöhen, ist es denkbar, dass die Fehlerbestimmungseinheit 16 der zweiten mobilen Vorrichtungen 12 über das Kommunikationsmodul 15 entsprechende Fehlerinformationen einer ortsfesten Referenzstation 20 erhält, aus der sich die globalen, d.h. positionsunabhängigen Fehleranteile des GNSS-Fehlers extrahieren lassen. Hierdurch wird es möglich, die Fehlerbestimmung der räumlich und zeitlich variierenden Fehler zu verbessern, und zwar hinsichtlich der Genauigkeit als auch der Berechnungsgeschwindigkeit, da nunmehr wesentlich früher eine Konvergenz erzielt werden kann. Die von den Fehlerbestimmungseinrichtungen 16 der zweiten mobilen Vorrichtungen 12 ermittelten Fehlerinformationen des GNSS werden nun mithilfe der Kommunikationsmodule 15 an die erste mobile Vorrichtung 11 übertragen und von dem dortigen Kommunikationsmodul 15 empfangen. Basierend auf den empfangenen Fehlerinformationen ist die Positionsermittlungseinrichtung 13 so ausgebildet, unter Berücksichtigung dieser Fehlerinformationen die Position der ersten mobilen Vorrichtung 11 basierend auf dem GNSS 100 zu ermitteln und dabei entsprechend den GNSS-Fehler durch eine entsprechende Korrektur basierend auf den übertragenen Fehlerinformationen zu kompensieren. Es bedarf somit keiner weiteren feststehenden Referenzstationen mehr, sondern es genügen bewegliche mobile Vorrichtungen, um die Genauigkeit in Bezug auf die räumlich und zeitlich variierenden Fehler des GNSS zu erhöhen.

Dabei ist es ebenfalls denkbar, dass auch die erste mobile Vorrichtung über ihr Kommunikationsmodul 15 entsprechende Fehlerinformationen der ortsfesten Referenzstation 20 erhält, wodurch die Positionsermittlung an sich verbessert werden kann. Dies ist insbesondere dann voreilhaft, wenn die zweiten mobilen Vorrichtungen lediglich die lokalen Fehleranteile, d.h. die atmosphärisch bedingten Fehleranteile des GNSS-Fehlers, übertragen. In diesem Falle können dann von der ortsfesten Referenzstation 20 die globalen Fehleranteile ermittelt werden.

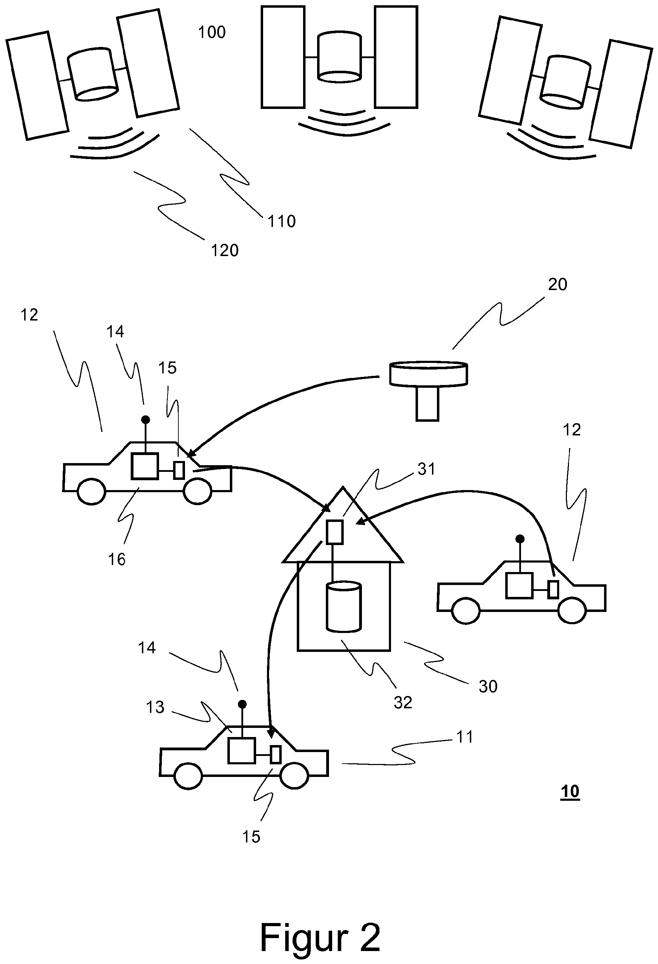

In einer zweiten Ausführungsform, die in Figur 2 dargestellt ist, übermitteln die einzelnen zweiten mobilen Vorrichtungen 12 ihre ermittelten Fehlerinformationen nicht direkt an die erste mobile Vorrichtung 11, sondern an eine Zentrale 30. Die Zentrale 30 weist hierfür ein Kommunikationsmodul 31 auf, um mit den mobilen Vorrichtungen zu kommunizieren. Die von den zweiten mobilen Vorrichtungen 12 ermittelten und übertragenen Fehlerinformationen werden dann von dem Kommunikationsmodul 31 der Zentrale 30 empfangen und in einem digitalen Datenspeicher 32 hinterlegt. Vorteilhafterweise erfolgt hierbei eine Zuordnung der Fehlerinformationen zu der Empfangsposition und zu der Ermittlungszeit, so dass sowohl räumlich als auch zeitlich eine entsprechende Fehlerinformation charakterisiert wird. Ein Fahrzeug, d.h. die erste mobile Vorrichtung 11, das nun seine Position ermitteln will, erhält nun an seiner entsprechenden aktuellen Position die Fehlerinformationen aus dem Datenspeicher 32, und zwar in Bezug zu seiner aktuellen Position. Diese wird zuvor grob ermittelt und dient dabei als Richtwert. Ausgehend von der grob ermittelten eigenen Position der ersten Vorrichtung 11 werden sodann alle Fehlerinformationen, die innerhalb eines vorgegebenen Radius bzw. einer vorgegebenen Umgebung liegen, aus dem digitalen Datenspeicher 32 ausgelesen und an das Kommunikationsmodul 15 der ersten mobilen Vorrichtung 11 übertragen.

Die Positionsermittlungseinrichtung 13 der ersten mobilen Vorrichtung ist nun so ausgebildet, dass sie basierend auf den GNSS-Signalen 120 und unter Berücksichtigung der übertragenden Fehlerinformationen die eigene Position ermittelt. Dabei ist es denkbar, dass zwischen den einzelnen Fehlerinformationen der verschiedenen zweiten mobilen Vorrichtungen sowie ggf. einer Referenzstation interpoliert wird, da in der Regel die erste mobile Vorrichtung sich nicht exakt an eine der Empfangspositionen der zweiten mobilen Vorrichtungen 12 befindet. In der Regel wird sich die erste mobile Vorrichtung bewegen, so dass hier kontinuierlich die bereitgestellten Fehlerinformationen ausgewertet und zwischen ihnen interpoliert werden muss.

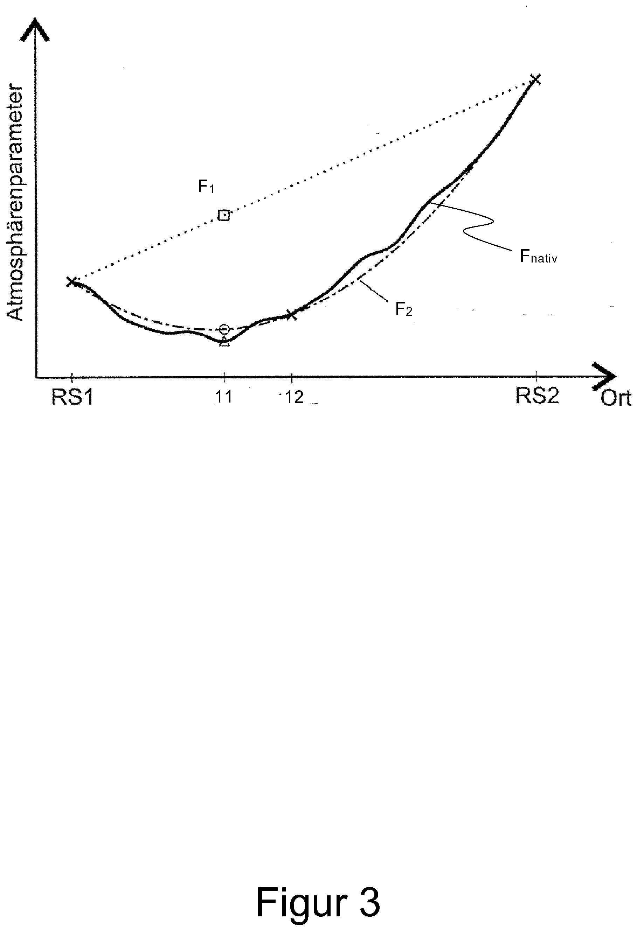

Ein Beispiel zeigt hierbei die Figur 3 in Form eines Diagramms. Auf der Y-Achse ist dabei exemplarisch ein atmosphärisch bedingter Fehleranteil abgetragen, während auf der X-Achse der Empfangsort definiert wird. An den beiden äußeren Ortspositionen RS1 und RS2 befindet sich jeweils eine Referenzstation RS1 und RS2, die hochgenau eine entsprechende Fehlerinformation liefert. Zwischen der Referenzstation RS1 und RS2 verändert sich jedoch der atmosphärisch bedingte Fehleranteil, da beide Referenzstationen räumlich sehr weit auseinanderstehen.

Die erste mobile Vorrichtung 11 möchte nunmehr ihre eigene Position ermitteln und dabei entsprechende Fehlerinformationen des GNSS berücksichtigen. Würde in der ersten mobilen Vorrichtung 11 dabei lediglich die atmosphärisch bedingten Fehleranteile der Referenzstation im RS1 und RS2 zur Verfügung stehen, so müsste sie in Bezug auf die räumliche Beabstandung der beiden Referenzstationen zwischen diesen interpolieren, was zu einem atmosphärisch bedingten Fehleranteil F1 führen würde. Dieser Fehleranteil ergibt sich dabei aus einer beispielsweise rein linearen Interpolation zwischen den beiden Referenzstationen RS1 und RS2.

Der tatsächliche Verlauf des atmosphärisch bedingten Fehleranteils, der als Kurve Fₙₐₜᵢᵥ in der Figur 3 gezeigt ist, weicht jedoch von dem interpolierten Fehlerverlauf stark ab, so dass bei der Ermittlung der eigenen Position durch die erste mobile Vorrichtung 11 eine nicht unerheblich Ungenauigkeit entstehen würde.

Zwischen den Referenzstationen 1 und 2 befindet sich des Weiteren eine zweite mobile Vorrichtung 12, die mithilfe ihrer Fehlerbestimmungseinrichtung eine Fehlerinformation bezüglich der räumlich und zeitlich variierenden Fehler des GNSS ermittelt hat. Diesen atmosphärisch bedingten Fehleranteil bzw. die darauf basierende Fehlerinformation überträgt die zweite mobile Vorrichtung 12 nun an die erste mobile Vorrichtung 11, die ihre Position ermitteln will.

Unter Kenntnis der Fehlerinformationen der beiden Referenzstationen RS1 und RS2 sowie unter Kenntnis der Fehlerinformation ermittelt durch die zweite mobile Vorrichtung 12 kann nun zwischen den beiden Referenzstationen RS1 und RS2 der tatsächliche Verlauf der räumlich und zeitlich begrenzten Fehler deutlich genauer interpoliert werden, was durch die interpolierte Kurve F₂ dargestellt ist. Wie zu erkennen ist, weicht hierbei der atmosphärisch bedingte Fehleranteil an der Position der ersten mobilen Vorrichtung 11 deutlich kleiner von dem interpolierten Verlauf F₂ ab als von dem interpolierten Verlauf F₁, so dass sich hier eine wesentliche höhere Genauigkeit bei der Positionsermittlung ergibt.

## Patentansprüche

1. Verfahren zum Ermitteln einer Position einer ersten mobilen Vorrichtung (11), wobei durch eine Positionsermittlungseinrichtung mittels eines GNSS basierend auf einer Laufzeitmessung von GNSS-Signalen (120) verschiedener GNSS-Satelliten (110), die von einem GNSS-Empfänger (14) der ersten mobilen Vorrichtung empfangen werden, die Position der ersten mobilen Vorrichtung ermittelt wird, mit den Schritten:
- Ermitteln mindestens einer Fehlerinformation des GNSS aus den GNSS-Signalen verschiedener GNSS-Satelliten, die von einem an mindestens einer zweiten mobilen Vorrichtung (12) vorgesehenen GNSS-Empfänger (14) an einer Empfangsposition der zweiten mobilen Vorrichtung empfangen werden, durch eine Fehlerbestimmungseinrichtung,
- Übertragen der ermittelten Fehlerinformation des GNSS an die Positionsermittlungseinrichtung der ersten mobilen Vorrichtung, und
- Ermitteln der Position der ersten mobilen Vorrichtung durch die Positionsermittlungseinrichtung unter Berücksichtigung der an der Empfangsposition der mindestens zweiten mobilen Vorrichtung ermittelten und an die Positionsermittlungseinrichtung übertragenen Fehlerinformation des GNSS, **dadurch gekennzeichnet, dass** eine Mehrzahl von zweiten mobilen Vorrichtungen vorgesehen sind, an deren jeweiligen Empfangspositionen mindestens eine Fehlerinformation des GNSS ermittelt wird, wobei die an den jeweiligen Empfangspositionen der zweiten mobilen Vorrichtungen ermittelten Fehlerinformationen des GNSS an die Positionsermittlungseinrichtung übertragen und die Position der ersten mobilen Vorrichtung durch die Positionsermittlungseinrichtung unter Berücksichtigung zumindest eines Teils dieser an den verschiedenen Empfangspositionen der zweiten mobilen Vorrichtungen ermittelten Fehlerinformationen des GNSS ermittelt wird, wobei eine oder mehrere positionsunabhängige Fehlerinformationen des GNSS, die unabhängig von einer Empfangsposition einen Genauigkeitsfehler des GNSS charakterisieren und die mittels wenigstens einer ortsfesten Referenzstation ermittelt wurden, an die Fehlerbestimmungseinrichtungen der zweiten mobilen Vorrichtungen übertragen werden, wobei eine positionsabhängige Fehlerinformation des GNSS, die abhängig von einer Empfangsposition einen Genauigkeitsfehler des GNSS charakterisiert, an der Empfangsposition der jeweiligen zweiten mobilen Vorrichtung aus den GNSS-Signalen verschiedener GNSS-Satelliten, die von dem GNSS-Empfänger der jeweiligen zweiten mobilen Vorrichtung an deren Empfangsposition empfangen werden, unter Berücksichtigung der positionsunabhängigen Fehlerinformationen einer Referenzstation durch die Fehlerbestimmungseinrichtung ermittelt wird, und wobei mindestens eine mittels wenigstens einer ortsfesten Referenzstation ermittelten Fehlerinformation des GNSS an die Positionsermittlungseinrichtung der ersten mobilen Vorrichtung übertragen wird, wobei die Position der ersten mobilen Vorrichtung durch die Positionsermittlungseinrichtung unter Berücksichtigung der Fehlerinformationen des GNSS ermittelt an den jeweiligen Empfangspositionen der zweiten mobilen Vorrichtungen und der mindestens einen Fehlerinformation des GNSS ermittelt mittels der wenigstens einen ortsfesten Referenzstation ermittelt wird.

2. Verfahren nach Anspruch 1, **dadurch gekennzeichnet, dass** eine Mehrzahl von zweiten mobilen Vorrichtungen vorgesehen sind, an deren jeweiligen Empfangspositionen mindestens eine Fehlerinformation des GNSS ermittelt wird, wobei nur die Fehlerinformationen derjenigen Empfangspositionen der zweiten mobilen Vorrichtungen, die innerhalb einer vorgegebenen Umgebung der ersten mobilen Vorrichtung liegen, bei der Ermittlung der Position der ersten mobilen Vorrichtung durch die Positionsermittlungseinrichtung berücksichtigt werden.

3. Verfahren nach Anspruch 1 oder 2, **dadurch gekennzeichnet, dass** die positionsunabhängigen Fehlerinformationen an die an der wenigstens einen zweiten mobilen Vorrichtung vorgesehene Fehlerbestimmungseinrichtung übertragen wird.

4. Verfahren nach Anspruch 3, **dadurch gekennzeichnet, dass** die positionsunabhängigen Fehlerinformationen ein Uhrenfehler eines GNSS-Satelliten, ein Bahnfehler eines GNSS-Satelliten, ein Signalbias, und/oder globale atmosphärisch bedingte Fehler sind und/oder dass die positionsabhängige Fehlerinformation ein lokaler, atmosphärisch bedingter Fehler ist, insbesondere ein durch die Ionosphäre bedingter Fehler.

5. System (10) zum Ermitteln einer Position einer ersten mobilen ' Vorrichtung (11), wobei das System eine Positionsermittlungseinrichtung hat, die zum Ermitteln der Position der ersten mobilen Vorrichtung mittels eines GNSS basierend auf einer Laufzeitmessung von GNSS-Signalen (120) verschiedener GNSS-Satelliten (110), die von einem GNSS-Empfänger (14) der ersten mobilen Vorrichtung empfangen werden, ausgebildet ist, wobei mindestens eine Fehlerbestimmungseinrichtung vorgesehen, die zum Ermitteln mindestens einer Fehlerinformation des GNSS aus den GNSS-Signalen verschiedener GNSS-Satelliten, die von einem an mindestens einer zweiten mobilen Vorrichtung (12) vorgesehenen GNSS-Empfänger (14) an einer Empfangsposition der zweiten mobilen Vorrichtung empfangen wurden, eingerichtet ist, und das System zum Übertragen der ermittelten Fehlerinformation des GNSS an die Positionsermittlungseinrichtung eingerichtet ist, wobei die Positionsermittlungseinrichtung zum Ermitteln der Position der ersten mobilen Vorrichtung unter Berücksichtigung der an der Empfangsposition der mindestens zweiten mobilen Vorrichtung ermittelten und an die Positionsermittlungseinrichtung übertragenen Fehlerinformation des GNSS ausgebildet ist, **dadurch gekennzeichnet, dass** für eine Mehrzahl von zweiten mobilen Vorrichtungen jeweils eine Fehlerbestimmungseinrichtung vorgesehen sind, die zum Ermitteln mindestens einer Fehlerinformation des GNSS an der Empfangsposition der jeweiligen zweiten mobilen Vorrichtung ausgebildet sind, wobei das System zum Übertragen der ermittelten Fehlerinformationen der jeweiligen zweiten mobilen Vorrichtungen an die Positionsermittlungseinrichtung der ersten mobilen Vorrichtung eingerichtet ist, und wobei die Positionsermittlungseinrichtung zum Ermitteln der Position der ersten mobilen Vorrichtung unter Berücksichtigung der an den jeweiligen Empfangspositionen der zweiten mobilen Vorrichtung ermittelten und an die Positionsermittlungseinrichtung übertragenen Fehlerinformationen des GNSS ausgebildet ist, wobei die Fehlerbestimmungseinrichtung zum Empfang einer oder mehrerer positionsunabhängiger Fehlerinformationen des GNSS, die unabhängig von einer Empfangsposition einen Genauigkeitsfehler des GNSS charakterisieren und die mittels wenigstens einer ortsfesten Referenzstation ermittelt wurden, ausgebildet und weiterhin eingerichtet ist, eine positionsabhängige Fehlerinformation des GNSS, die abhängig von einer Empfangsposition einen Genauigkeitsfehler des GNSS charakterisiert, an der jeweiligen Empfangsposition der zweiten mobilen Vorrichtungen aus den GNSS-Signalen verschiedener GNSS-Satelliten, die von dem GNSS-Empfänger der zweiten mobilen Vorrichtungen an deren Empfangsposition empfangen werden, unter Berücksichtigung der positionsunabhängigen Fehlerinformationen zu ermitteln, wobei die Positionsermittlungseinrichtung der ersten mobilen Vorrichtung zum Empfangen mindestens einer mittels wenigstens einer ortsfesten Referenzstation ermittelten Fehlerinformation des GNSS ausgebildet und zum Ermitteln der Position der ersten mobilen Vorrichtung unter Berücksichtigung der Fehlerinformationen des GNSS ermittelt an den jeweiligen Empfangspositionen der zweiten mobilen Vorrichtungen und der mindestens einen Fehlerinformation des GNSS ermittelt mittels der wenigstens einen ortsfesten Referenzstation eingerichtet ist.

6. System nach Anspruch 5, **dadurch gekennzeichnet, dass** das System ausgebildet ist, nur die Fehlerinformationen derjenigen Empfangspositionen der zweiten mobilen Vorrichtung, die innerhalb einer vorgegebenen Umgebung der ersten mobilen Vorrichtung liegen, an die Positionsermittlungseinrichtung der ersten mobilen Vorrichtung zu übertragen.

7. System nach Anspruch 5, **dadurch gekennzeichnet, dass** die Positionsermittlungseinrichtung der ersten mobilen Vorrichtung ausgebildet ist, nur die Fehlerinformationen derjenigen Empfangspositionen der zweiten mobilen Vorrichtung, die innerhalb einer vorgegebenen Umgebung der ersten mobilen Vorrichtung liegen, bei der Ermittlung der Position der ersten mobilen Vorrichtung zu berücksichtigen.

8. System nach einem der Ansprüche 5 bis 7, **dadurch gekennzeichnet, dass** die positionsunabhängigen Fehlerinformationen ein Uhrenfehler eines GNSS-Satelliten, ein Bahnfehler eines GNSS-Satelliten, ein Signalbias, und/oder globale atmosphärisch bedingte Fehler sind und/oder dass die positionsabhängige Fehlerinformation ein lokaler, atmosphärisch bedingter Fehler ist, insbesondere ein durch die Ionosphäre bedingter Fehler.

## Claims

1. Method for ascertaining a position of a first mobile apparatus (11), wherein a position finding device uses a GNSS to ascertain the position of the first mobile apparatus based on a propagation time measurement for GNSS signals (120) of different GNSS satellites (110) that are received by a GNSS receiver (14) of the first mobile apparatus, having the steps of:
- ascertainment of at least one piece of error information of the GNSS from the GNSS signals of different GNSS satellites that are received by a GNSS receiver (14) provided on at least one second mobile apparatus (12) at a reception position of the second mobile apparatus, by an error determination device,
- transmission of the ascertained error information of the GNSS to the position finding device of the first mobile apparatus, and
- ascertainment of the position of the first mobile apparatus by the position finding device taking into consideration the error information of the GNSS ascertained at the reception position of the at least one second mobile apparatus and transmitted to the position finding device, **characterized in that** a plurality of second mobile apparatuses are provided at whose respective reception positions at least one piece of error information of the GNSS is ascertained, wherein the error information of the GNSS ascertained at the respective reception positions of the second mobile apparatuses is transmitted to the position finding device and the position of the first mobile apparatus is ascertained by the position finding device taking into consideration at least some of this error information of the GNSS ascertained at the different reception positions of the second mobile apparatuses, wherein one or more pieces of position-independent error information of the GNSS that characterize an accuracy error of the GNSS independently of a reception position and that have been ascertained by means of at least one fixed-location reference station are transmitted to the error determination devices of the second mobile apparatuses, wherein a piece of position-dependent error information of the GNSS that characterizes an accuracy error of the GNSS depending on a reception position is ascertained by the error determination device at the reception position of the respective second mobile apparatus from the GNSS signals of different GNSS satellites that are received by the GNSS receiver of the respective second mobile apparatus at the reception position thereof, taking into consideration the position-independent error information of a reference station, and wherein at least one piece of error information of the GNSS ascertained by means of at least one fixed-location reference station is transmitted to the position finding device of the first mobile apparatus, wherein the position of the first mobile apparatus is ascertained by the position finding device taking into consideration the error information of the GNSS ascertained at the respective reception positions of the second mobile apparatuses and the at least one piece of error information of the GNSS ascertained by means of the at least one fixed-location reference station.

2. Method according to Claim 1, **characterized in that** a plurality of second mobile apparatuses are provided at whose respective reception positions at least one piece of error information of the GNSS is ascertained, wherein only the error information of those reception positions of the second mobile apparatuses that are within a prescribed surrounding area of the first mobile apparatus are taken into consideration by the position finding device when ascertaining the position of the first mobile apparatus.

3. Method according to Claim 1 or 2, **characterized in that** the position-independent error information is transmitted to the error determination device provided on the at least one second mobile apparatus.

4. Method according to Claim 3, **characterized in that** the position-independent error information is a clock error of a GNSS satellite, an orbit error of a GNSS satellite, a signal bias and/or global atmospherically conditional errors and/or **in that** the position-dependent error information is a local, atmospherically conditional error, particularly an error conditional upon the ionosphere.

5. System (10) for ascertaining a position of a first mobile apparatus (11), wherein the system has a position finding device that is configured to ascertain the position of the first mobile apparatus by means of a GNSS based on a propagation time measurement for GNSS signals (120) of different GNSS satellites (110) that are received by a GNSS receiver (14) of the first mobile apparatus, wherein at least one error determination device is provided that is set up to ascertain at least one piece of error information of the GNSS from the GNSS signals of different GNSS satellites that have been received by a GNSS receiver (14) provided on at least one second mobile apparatus (12) at a reception position of the second mobile apparatus, and the system is set up to transmit the ascertained error information of the GNSS to the position finding device, wherein the position finding device is configured to ascertain the position of the first mobile apparatus taking into consideration the error information of the GNSS ascertained at the reception position of the at least one second mobile apparatus and transmitted to the position finding device, **characterized in that** a plurality of second mobile apparatuses have a respective error determination device provided for them that are configured to ascertain at least one piece of error information of the GNSS at the reception position of the respective second mobile apparatus, wherein the system is set up to transmit the ascertained error information of the respective second mobile apparatuses to the position finding device of the first mobile apparatus, and wherein the position finding device is configured to ascertain the position of the first mobile apparatus taking into consideration the error information of the GNSS ascertained at the respective reception positions of the second mobile apparatus and transmitted to the position finding device, wherein the error determination device is configured to receive one or more pieces of position-independent error information of the GNSS that characterize an accuracy error of the GNSS independently of a reception position and that have been ascertained by means of at least one fixed-location reference station, and is additionally set up to ascertain a piece of position-dependent error information of the GNSS that characterizes an accuracy error of the GNSS depending on a reception position at the respective reception position of the second mobile apparatuses from the GNSS signals of different GNSS satellites that are received by the GNSS receiver of the second mobile apparatuses at the reception position thereof, taking into consideration the position-independent error information, wherein the position finding device of the first mobile apparatus is configured to receive at least one piece of error information of the GNSS ascertained by means of at least one fixed-location reference station and is set up to ascertain the position of the first mobile apparatus taking into consideration the error information of the GNSS ascertained at the respective reception positions of the second mobile apparatuses and the at least one piece of error information of the GNSS ascertained by means of the at least one fixed-location reference station.

6. System according to Claim 5, **characterized in that** the system is configured to transmit only the error information of those reception positions of the second mobile apparatus that are within a prescribed surrounding area of the first mobile apparatus to the position finding device of the first mobile apparatus.

7. System according to Claim 5, **characterized in that** the position-finding device of the first mobile apparatus is configured to take into consideration only the error information of those reception positions of the second mobile apparatus that are within a prescribed surrounding area of the first mobile apparatus when ascertaining the position of the first mobile apparatus.

8. System according to one of Claims 5 to 7, **characterized in that** the position-independent error information is a clock error of a GNSS satellite, an orbit error of a GNSS satellite, a signal bias and/or global atmospherically conditional errors and/or **in that** the position-dependent error information is a local, atmospherically conditional error, particularly an error conditional upon the ionosphere.

## Revendications

1. Procédé pour déterminer une position d'un premier dispositif mobile (11), dans lequel
via un moyen de détermination de position au moyen d'un système de positionnement et de datation par satellites (GNSS) sur la base d'une mesure de temps de parcours de signaux GNSS (120) provenant de différents satellites GNSS (110), qui sont reçus par un récepteur GNSS (14) du premier dispositif mobile, la position du premier dispositif mobile est déterminée avec les étapes consistant à :
- déterminer au moins une information d'erreur du GNSS à partir des signaux GNSS de différents satellites GNSS, qui sont reçus par un récepteur GNSS (14) prévu sur au moins un deuxième dispositif mobile (12) à une position de réception du deuxième dispositif mobile, via un moyen de définition d'erreur,
- transmettre l'information d'erreur déterminée du GNSS vers le moyen de détermination de position du premier dispositif mobile, et
- déterminer la position du premier dispositif mobile via le moyen de détermination de position en tenant compte de l'information d'erreur du GNSS déterminée à la position de réception dudit au moins deuxième dispositif mobile et transmise vers le moyen de détermination de position,
**caractérisé en ce que**
une pluralité de deuxièmes dispositifs mobiles sont prévus, aux positions de réception respectives desquels au moins une information d'erreur du GNSS est déterminée, dans lequel les informations d'erreur du GNSS déterminées aux positions de réception respectives des deuxièmes dispositifs mobiles sont transmises vers le moyen de détermination de position et la position du premier dispositif mobile est déterminée par le moyen de détermination de position en tenant compte d'au moins une partie de ces informations d'erreur du GNSS déterminées aux différentes positions de réception des deuxièmes dispositifs mobiles, dans lequel une ou plusieurs informations d'erreur du GNSS indépendantes de la position, qui caractérisent une erreur de précision du GNSS indépendamment d'une position de réception, et qui ont été déterminées au moyen d'au moins une station de référence stationnaire, sont transmises vers les moyens de détermination d'erreur des deuxièmes dispositifs mobiles, dans lequel une information d'erreur du GNSS dépendante de la position, qui caractérise une erreur de précision du GNSS en dépendance d'une position de réception, est déterminée à la position de réception du deuxième dispositif mobile respectif à partir des signaux GNSS de différents satellites GNSS, qui sont reçus par le récepteur GNSS du deuxième dispositif mobile respectif à la position de réception de celui-ci, en tenant compte des informations d'erreur, indépendantes de la position, d'une station de référence via le moyen de définition d'erreur, et dans lequel au moyen une information d'erreur du GNSS déterminée au moyen d'au moins une station de référence stationnaire est transmise vers le moyen de détermination de position du premier dispositif mobile, dans lequel la position du premier dispositif mobile est déterminée via le moyen de détermination de position en tenant compte des informations d'erreur du GNSS aux positions de réception respectives des deuxièmes dispositifs mobiles et de ladite au moins une information d'erreur du GNSS déterminée, au moyen d'au moins une station de référence stationnaire.

2. Procédé selon la revendication 1, **caractérisé en ce qu'**une pluralité de deuxièmes dispositifs mobiles sont prévus, aux positions de réception respectives desquels au moins une information d'erreur du GNSS est déterminée, dans lequel uniquement les informations d'erreur de celles des positions de réception des deuxièmes dispositifs mobiles, qui se trouvent à l'intérieur d'un environnement donné du premier dispositif mobile, sont prises en compte lors de la détermination de la position du premier dispositif mobile via le moyen de détermination de position.

3. Procédé selon la revendication 1 ou 2, **caractérisé en ce que** les informations d'erreur indépendantes de la position sont transmises vers le moyen de définition d'erreur prévu sur ledit au moins un deuxième dispositif mobile.

4. Procédé selon la revendication 3, **caractérisé en ce que** les informations d'erreur indépendantes de la position sont une erreur d'horloge d'un satellite GNSS, une erreur de trajectoire d'un satellite GNSS, une polarisation de signal, et/ou des erreurs globales conditionnées par l'atmosphère et/ou **en ce que** l'information d'erreur dépendante de la position est une erreur locale conditionnée par l'atmosphère, en particulier une erreur conditionnée par l'ionosphère.

5. Système (10) pour déterminer une position d'un premier dispositif mobile (11), dans lequel
le système a un moyen de détermination de position qui est réalisé pour déterminer la position du premier dispositif mobile au moyen d'un GNSS sur la base d'une mesure de parcours de signaux GNSS (120) de différents satellites GNSS (110), qui sont reçus par un récepteur GNSS (14) du premier dispositif mobile, dans lequel au moins un moyen de définition d'erreur est prévu, qui est configuré pour déterminer au moins une information d'erreur du GNSS à partir des signaux GNSS de différents satellites GNSS, qui ont été reçus par un récepteur GNSS (14) prévu sur au moins un deuxième dispositif mobile (12) à une position de réception du deuxième dispositif mobile, et le système est configuré pour transmettre l'information d'erreur du GNSS déterminée vers le moyen de détermination de position, dans lequel le moyen de détermination de position est réalisé pour déterminer la position du premier dispositif mobile en tenant compte de l'information d'erreur du GNSS déterminée à la position de réception dudit au moins un deuxième dispositif mobile et transmise vers le moyen de détermination de position, **caractérisé en ce qu'**un moyen de définition d'erreur est prévu pour chacun d'une pluralité de deuxièmes dispositifs mobiles, qui est réalisé pour déterminer au moins une information d'erreur du GNSS à la position de réception du deuxième dispositif respectif, dans lequel le système est configuré pour transmettre les informations d'erreur déterminées des deuxièmes dispositifs mobiles respectifs vers le moyen de détermination de position du premier dispositif mobile, et dans lequel le moyen de détermination de position est réalisé pour déterminer la position du premier dispositif mobile en tenant compte des informations d'erreur du GNSS déterminées aux positions de réception respectives des deuxièmes dispositifs mobiles et transmises vers le moyen de détermination de position, dans lequel le moyen de définition d'erreur est réalisé pour recevoir une ou plusieurs informations d'erreur du GNSS indépendantes de la position, qui caractérisent une erreur de précision du GNSS indépendamment d'une position de réception et qui ont été déterminées au moyen d'au moins une station de référence stationnaire, et est en outre configuré pour déterminer une information d'erreur du GNSS dépendante de la position, qui caractérise une erreur de précision du GNSS en dépendance d'une position de réception, à la position de réception respective des deuxièmes dispositifs mobiles à partir des signaux GNSS de différents satellites GNSS, qui sont reçus par le récepteur GNSS des deuxièmes dispositifs mobiles à la position de réception de ceux-ci, en tenant compte des informations d'erreur indépendantes de la position, dans lequel le moyen de détermination de position du premier dispositif mobile est réalisé pour recevoir au moins une information d'erreur du GNSS déterminée au moyen d'au moins une station de référence stationnaire, et est configuré pour déterminer la position du premier dispositif mobile en tenant compte des erreurs d'information du GNSS aux positions de réception respectives des deuxièmes dispositifs mobiles, et de ladite au moins une information d'erreur du GNSS déterminée au moyen de ladite au moins une station de référence stationnaire.

6. Système selon la revendication 5, **caractérisé en ce que** le système est réalisé pour transmettre uniquement les informations d'erreur de celles des positions de réception du deuxième dispositif mobile, qui se trouvent à l'intérieur d'un environnement donné du premier dispositif mobile, vers le moyen de détermination de position du premier dispositif mobile.

7. Système selon la revendication 5, **caractérisé en ce que** le moyen de détermination de position du premier dispositif mobile est réalisé pour tenir compte uniquement des informations d'erreur de celles des positions de réception du deuxième dispositif mobile, qui se trouvent à l'intérieur d'un environnement donné du premier dispositif mobile, lors de la détermination de la position du premier dispositif mobile.

8. Système selon l'une quelconque des revendications 5 à 7, **caractérisé en ce que** les informations d'erreur indépendantes de la position sont une erreur d'horloge d'un satellite GNSS, une erreur de trajectoire d'un satellite GNSS, une polarisation de signal, et/ou des erreurs globales conditionnées par l'atmosphère et/ou **en ce que** l'information d'erreur dépendante de la position est une erreur locale conditionnée par l'atmosphère, en particulier une erreur conditionnée par l'ionosphère.
